# EUROPEAN PATENT SPECIFICATION

(11) **EP 1 040 601 B1**
(45) Date of publication and mention of the grant of the patent: **12.11.2003**
(21) Application number: 98942331.4
(22) Date of filing: 01.09.1998
(51) Int. Cl.: H04B 7/26, H04Q 7/22

(54) **RETRIEVING STORED DATA FROM A BASE UNIT OF A MULTI-LINE WIRELESS PHONE SYSTEM**
AUFFINDEN VON GESPEICHERTEN DATEN AUS EINER FESTSTATION EINER DRAHTLOSEN MEHRKANALTELEFONANORDNUNG
EXTRACTION DE DONNEES STOCKEES DANS UNE UNITE DE BASE D'UN RESEAU DE TELEPHONIE MULTILIGNE SANS FIL

(30) Priority: 12.12.1997 US 69555 P
(43) Date of publication of application: 04.10.2000
(73) Proprietor: THOMSON CONSUMER ELECTRONICS, INC., Indianapolis, IN 46290-1024 (US)
(72) Inventor: RAMASWAMY, Kumar, Indianapolis, IN 46240 (US); KNUTSON, Paul, Gothard, Indianapolis, IN 46219 (US)
(74) Representative: Kohrs, Martin
(86) International application number: US9818087
(87) International publication number: WO99031825

(56) References cited:
- EP-A- 0 399 611
- DE-A- 3 130 176
- US-A- 5 521 925

## Description

### BACKGROUND OF THE INVENTION

### Field of the Invention

The present invention relates to multi-line wireless telephone systems and, in particular, to data transmission in a time-division multiplexed (TDM) wireless telephone system.

### Description of the Related Art

The use of telephones and telephone systems, including wireless telephone systems, is widespread. In wireless telephone systems, a cordless or wireless telephone handset unit communicates via either analog or digital radio signals with a base unit, which is typically connected via a standard telephone line to an external telephone network. In this manner, a user may employ the wireless handset to engage in a telephone call with another user through the base unit and the telephone network.

Multi-line wireless telephone systems are in use in various situations, such as businesses with many telephone users. Such systems employ a handset that communicates with up to N handsets simultaneously, typically with digital communications schemes, such as a spread-spectrum, time division multiple access (TDMA). In a TDMA system, a single RF channel is used, and each handset transmits and receives audio data packets as well as non-audio data packets during dedicated time slices or slots within an overall TDMA cycle or epoch. It is desirable to provide various features, such as private branch exchange (PBX) features and capabilities, in a multi-line wireless telephone system. It is also desirable to transmit or retrieve non-audio data over the RF channel. For example, a handset may wish to retrieve certain stored data, such as voice mail or caller ID data, which is stored in the base unit or in a device coupled to the base unit.

European Patent Application No. 0 399 611, filed 22.05.90, describes a communications system for data transmission over a time division duplex frequency channel, in which TDMA is used for forward and reverse transmissions between a primary and secondary station.

### SUMMARY

A wireless telephone system comprising a base unit and a plurality of wireless handsets. The base unit has a base transceiver and a memory for storing stored information. Each handset has a handset transceiver for establishing a data link and an audio link over a shared RF channel with the base unit via the base transceiver, wherein the data link is for transmitting signaling information and the audio link is for transmitting voice data for a real-time telephone conference. The handset requests from the base unit certain stored information. In response, the base unit retrieves the requested stored information from the memory and transmits the stored information to the handset via the audio link.

### BRIEF DESCRIPTION OF THE DRAWINGS

Fig. 1 is a block diagram of TDMA multi-line wireless telephone system, in accordance with an embodiment of the present invention; and
Fig. 2 is a schematic representation of the TDMA slot structure used in the TDMA scheme of the system of Fig. 1, in accordance with an embodiment of the present invention.

### DESCRIPTION OF THE PREFERRED EMBODIMENT

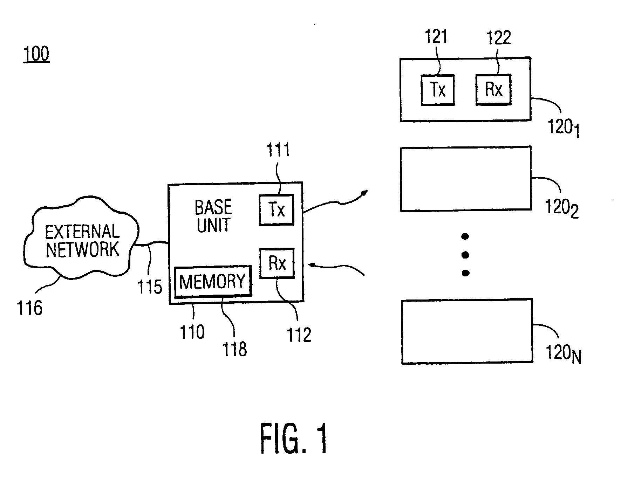

Referring now to Fig. 1, there is shown a block diagram of TDMA multi-line wireless telephone system 100, in accordance with an embodiment of the present invention. TDMA system 100 comprises a base unit 110, which has receiver and transmitter units 112 and 111, respectively, and is coupled to external telephone network 116 via telephone line(s) 115. Base unit 110 has a memory or storage device 118, such as a RAM or hard disk drive, for storing stored data. System 100 also comprises N wireless handsels 120₁, 120₂,... 120_{N}. Each has a transmitter and receiver unit (transceiver), such as transmitter 121 and receiver 122 of handset 120₁. At any given time, some number (or none) of the handsets are operating or off hook (i.e., in the process of conducting a telephone call). System 100 thus provides a wireless network between the base station 110 and each handset 120ᵢ (1 ≤ i ≤ N). In one embodiment, system 100 comprises 4 handsets 120₁-120₄, all of which may be active simultaneously. In another embodiment, system 100 comprises a different number of handsets, e.g. N=12, of which up to 8 can be active or operational at a time.

In one embodiment, the present invention comprises a TDMA system for connecting multiple transceivers to a base station over a single RF channel. In particular, system 100 employs a digital TDMA scheme, as described in further detail below, which allows power to be efficiently used since each operating handset is "off'' (i.e., not transmitting or receiving data, and thus not using as much battery power) during most portions of the TDMA epoch, and is only "on" during its own time slices or slots. In another embodiment, a handset powers off by switching off power to at least its CPU and transceiver (receiver and transmitter) units, while leaving powered on only a clock and associated timer or watchdog circuitry sufficient to wake up the CPU at a predetermined slot time.

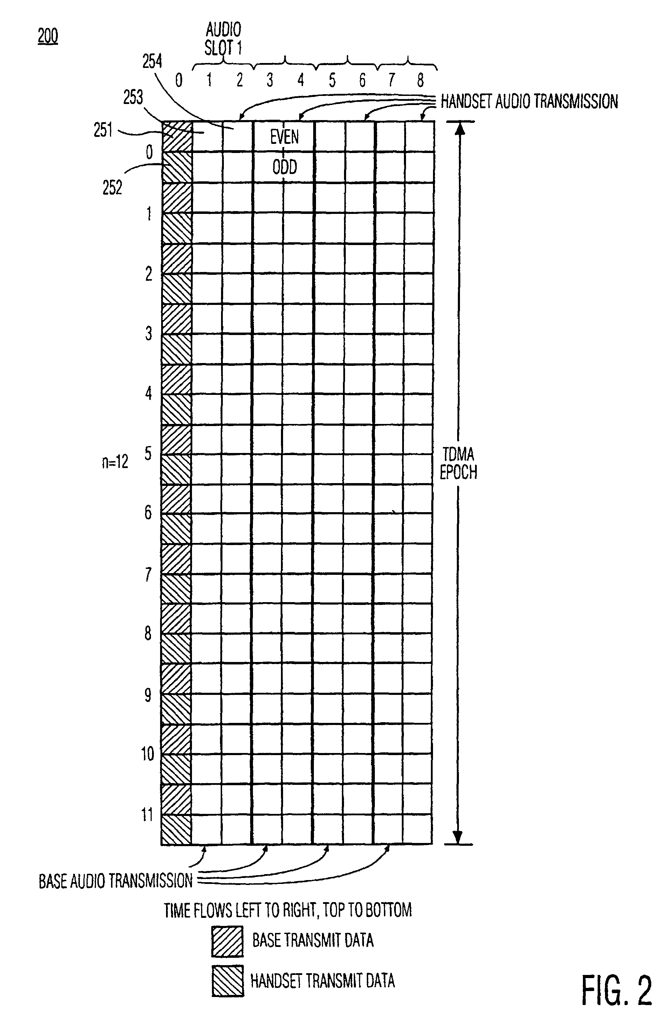

Referring now to Fig. 2, there is shown a schematic representation of the TDMA slot structure 200 used in the TDMA scheme 200 of the system of Fig. 1, in accordance with an embodiment of the present invention. System 100 employs a TDMA epoch having structure 200, which is illustrated assuming 12 total handsets 120₁-120₁₂, of which 8 can be active or operational at a time, e.g. handsets 120₁-120₈. TDMA epoch structure 200 comprises a number of rows and columns. Each row of TDMA structure 200 represents a 2ms field of digital data, and is either even or odd and grouped in a pair with an odd or even, respectively, row or field. TDMA epoch structure 200 is a 48ms epoch.

In normal mode of operation, each field comprises nine total packets: a (non-audio) data packet in the first column (either transmitted from the base or from a handset) and eight audio packets, grouped in 4 pairs of two. Each such pair of audio packets in a row includes one packet (time slot) of base audio transmission (to a given handset from base unit 110) and one packet of handset audio transmission (from the given handset to the base). Thus, within each epoch, there is allocated to each handset one pair of data packet slots and several pairs of audio packet slots. The data packet slots are used to establish a "data link" with each respective handset, and the audio packet slots are used to establish an "audio link" with each respective handset. The data links together constitute the system's data channel, while the audio links constitute the system's audio channel. In other words, the first column of TDMA epoch structure 200 corresponds to the data channel (data links), and the remaining columns correspond to the audio channel (audio links).

The data link for a given handset is used to transmit, via data packets, non-audio data referred to generally herein as signaling information. Each data packet is a set of data transmitted either to a given handset from the base unit or vice-versa, during a discrete time slot during which time no other handsets receive or transmit data a over the system's data channel. These data packets may contain various types of data, such as synchronization data or words with time stamp information transmitted to a handset in sleep mode, caller ID information, incoming call information, telephone number being dialed by the handset, and the like. The signaling information conveyed by the data link is used to setup calls, inform the handset of incoming calls, maintaining the communication links between the handsets and base, and the like.

Voice data, i.e. audio packets containing audio data for a real-time telephone conversation, is transmitted over the audio link for a given handset. The bandwidth for the audio link for a handset is much higher than the bandwidth for the data link. This is because, within each epoch, there is allocated to each handset one pair of data packet slots and several pairs of audio packet slots. For example, for N=12 total handsets 120₁-120₁₂ with up to 8 off hook at a time, there are 12 audio packet pairs per handset per epoch, compared to 1 data packet pair per handset per epoch, for an audio channel (or link) bandwidth 12 times greater than the data channel (or link) bandwidth. The audio packets contain digitized (and possibly compressed) voice information.

Thus, for example, row pair 0 comprises an even row and odd row. In the even row, the base transmits data in the first time slot (slot 251), to one of the 12 handsets, e.g. handset 120₁. There is one row pair in epoch 200 for each handset, so that each handset can receive and transmit data to base unit 110 once per epoch. After the first data slot 251, assuming handset 120, is operational (off hook), an audio packet is transmitted to handset 120₁ in audio packet slot 253, then an audio packet is transmitted by handset 120₁ to base unit 110 in audio packet slot 254, and so on for 3 of the other handsets until the end of the field or row. In the odd row for row pair 0, data slot 252 is used to receive data transmitted from handset 120₁ to base unit 110, and audio packets are transmitted for the remaining 4 active handsets. In row pairs 1-11, the same sequence occurs, except the data packets are to and from different handsets than for row pair 0.

It is desirable for a handset user to be able to retrieve stored data which is stored in memory 118 of the base unit 110. This information is in addition to signaling data typically transmitted via the data link and voice data typically transmitted via the audio link. Stored data includes all stored/backed up information that is available in the base unit This information may represent voice, data, or other service information. For example, the stored data may be a voice mail information, caller JD information, or other service information.

Such stored information is typically requested by a handset via its data link, since the request is itself a type of signaling information. Because the stored data is not audio data pertaining to a concurrent telephone call, it could be transmitted via the data link. However, this may be impractical or undesirable because the bandwidth of the data link is lower than that of the audio link. Therefore, in the present invention, when stored information is requested by a handset, the audio link is temporarily convened to a "stored data" link, voice data transmission is temporarily halted (muted or interrupted), and stored data is transferred to the handset during that handset's audio data slots. This allows the stored data to be transmitted at a much higher rate to the handset than if the lower-bandwidth data link were used.

In the present invention, first, a handset 120ᵢ requests stored data from base unit 110. Base unit 110 then fetches the stored data from memory 118, and combines the stored data into the voice link for handset 120ᵢ as digital information. Since handset 120ᵢ has knowledge about its request, it knows what type of stored data to expect on its audio link, and thus knows which type of decoding or processing to use when the stored information is received.

For example, if a voice mail message is to be retrieved, handset 120ᵢ transmits an appropriate request for the voice mail message to base unit 110 via its data link. Base unit 110 retrieves the stored voice mail data, which may be stored in compressed format for efficient use of memory 118. This compressed, digital information representing the requested voice mail message is then transmitted to handset 120ᵢ via its audio link, instead of its data link. Handset 120ᵢ then processes the stored data received via its audio link through its voice decompression engine. On the other hand, if caller ID information is retrieved, then the data coming over the audio link is appropriately processed and displayed on the handset's display.

The present invention, therefore, creates an asymmetrical link for information retrieval in a wireless system so that efficient use of the available bandwidth is possible.

In an alternative embodiment, the audio link is used to retrieve stored data only if it is not already in use. In this case, the data link is used by a handset to request retrieval of stored data. If the audio link is in use by the handset, then the data link is used to transmit the scored data to the handset. However, if the audio link is not in use, then the audio link is used instead as a "stored data" link to transmit the stored data at a higher rate.

In an alternative embodiment, the stored information retrieved by a handset is not actually stored in base unit 110, but is stored in a device external to base unit 110, such as an external PC or storage device, which is coupled by a suitable interface to base unit 110. In this case, the stored information is retrieved by the handset from the storage device, via base unit 110, and the storage device is considered to be the same as memory 118, whether located in base unit 110, directly accessible by base unit 110, or accessible by base unit 110 via some interface. For purposes of this application, therefore, any information stored either directly in base unit 110 or in a device functionally coupled thereto such that the base unit is able to provide the stored data upon request to a handset, is considered to be information stored in base unit 110, since from the point of view of a handset, the request is made of base unit 110 and the information provided by base unit 110 appears to be stored in base unit 110.

One skilled in the art will recognize that the wireless system described above according to the principles of the invention may be a cellular system where base unit 110 represents a base station serving one of the cells in a cellular telephone network.

In an alternative embodiment, instead of a handset retrieving over the audio link data actually stored in memory 118, the handset may wish to retrieve data from a data source accessible to the base unit 110. For example, base unit 110 may receive via an external line a modem signal containing data. In this case, the handset may be coupled to a telephone data port of a computer, for example. The handset requests from base unit 110 to be connected to a data source or channel, such as that provided by the modem. Base unit 110 then transmits the data decoded from the modem, to the handset via the audio link.

## Claims

1. A wireless telephone system (100) comprising:
(a) a base unit (110) having a base transceiver (111,112); and
(b) a plurality of wireless handsets (120), each handset (120ᵢ) comprising a handset transceiver (121, 122) for establishing with the base unit (110) via the base transceiver a time-division multiple access (TDMA) data link and a TDMA audio link, in accordance with a TDMA epoch (200) allocating exclusive data and audio packet time slots to each handset (120ᵢ), wherein the data link is for transmitting signaling information and the audio link is for transmitting voice data for a real-time telephone call, **characterized in that**
said base unit (110), upon request from a handset (120ᵢ) for data from a data source, retrieves the requested data from the data source and transmits the retrieved data to the handset (120ᵢ) via the audio link, wherein:
the epoch (200) has a plurality of transmit and receive data row pairs, one such row pair for each handset (120ᵢ) wherein each row pair comprises an even row comprising a transmit data time slot (251) for the respective handset and a plurality of transmit and receive audio packet time slots (253, 254) for half of the maximum number of the plurality of handsets which may be communicating at a time, and an odd row comprising a receive data time slot (252) or the respective handset and a plurality of transmit and receive audio packet time slots for the other half of the maximum number of the plurality of handsets which may be communicating at a time; and
each handset (120ᵢ) receives and transmits data packets via said receive and transmit data packet slots (251, 252) only once during each epoch (200), during the transmit and receive data row pair for each said handset, and, if the handset is communicating with the base unit, said each handset receives and transmits audio packets during respective transmit and receive audio packet time slots (253, 254) of each row pair of the epoch.

2. The system of claim 1, wherein:
the plurality of handsets (120) comprises 12 handsets, 8 of which may be communicating at a time;
the epoch (200) comprises 12 data row pairs, one data row pair for each handset; and
each row pair comprises 8 transmit and receive audio packet time slot pairs for audio communications for the communicating handsets.

3. The system of claim 1, wherein the data source is a memory (118) for storing data and the requested data is stored data stored in the memory.

4. The system of claim 3, wherein the base unit (110) comprises the memory (118).

5. The system of claim 3, wherein the base unit (110) is coupled to an external computer comprising the memory (118).

6. The system of claim 3, wherein the base unit (110) transmits the stored information to the handset (120ᵢ) via the audio link only if the handset is not currently using the audio link to transmit real-time telephone conference voice data, and transmits the stored information to the handset via the data link if the handset is currently using the audio link to transmit real-time telephone conference voice data.

7. The system of claim 3, wherein the stored information is one of stored caller ID information and stored compressed voice mail message data.

8. The system of claim 7, wherein the handset requesting the stored information processes the stored information upon receipt in accordance with the nature of the stored information.

9. In a wireless telephone system (100) comprising a base unit (110) having a base transceiver (111, 112) and a plurality of wireless handsets (120), each handset (120ᵢ) comprising a handset transceiver (121,122), a method comprising the steps of:
(a) establishing, with each handset via its handset transceiver, a time-division multiple access (TDMA) data link with the base unit via the base transceiver, and, with each handset that is communicating with the base unit, a TDMA audio link with the base unit via the base transceiver, in accordance with a TDMA epoch (200) allocating exclusive data and audio packet time slots to each handset (120ᵢ), wherein the data link is for transmitting signaling information and the audio link is for transmitting voice data for a real-time telephone call; **characterized by** the steps of:
(b) requesting , with the handset , from the base unit, data from a data source;
(c) retrieving, with the base unit, the requested data from the data source in response to the request ; and
(d) transmitting the retrieved data from the base unit to the handset via the audio link; wherein:
the epoch (200) has a plurality of transmit and receive data row pairs, one such row pair for each handset (120ᵢ) , wherein each row of a row pair comprises an even row comprising a transmit data time slot for the respective handset and a plurality of transmit and receive audio packet time slots for half of the maximum number of the plurality of handsets which may be communicating at a time , and an odd row comprising a receive data time slot for the respective handset and a plurality of transmit and receive audio packet time slots for the other half of the maximum number of the plurality handsets which may be communicating at a time; and
each handset (120ᵢ) receives and transmits data packets via receive and transmit data packet slots (251,252) only once during each epoch (200) , during the transmit and receive data row pair for each said handset, and, If the handset is communicating with the base unit, said each handset receives and transmits audio packets during respective transmit and receive audio packet time slots (253,254) of each row pair of the epoch.

10. The method of claim 9, wherein the data source is a memory for storing data and the requested data is stored data stored in the memory.

11. A base unit (110) for communicating with a plurality of wireless handsets (120), each handset (120ᵢ) comprising a handset transceiver (121, 122), the base unit (110) comprising:
(a) a base transceiver (11,112) for establishing a time-division multiple access (TDMA) data link with each handset via the base transceiver, and, with each handset that is communicating with the base unit, a TDMA audio link via the base transceiver, in accordance with a TDMA epoch (200) allocating exclusive data and audio packet time slots to each handset (120ᵢ) wherein the data link is for transmitting signaling Information and the audio link is for transmitting voice data for a telephone call; and
(b) a memory (118) for storing stored information, **characterized in that**:
said the base unit, upon request from the handset for stored information stored in the memory , retrieves the requested stored information from the memory and transmits the stored information to the handset via the audio link, wherein:
the epoch (200) has a plurality of transmit and receive data row pairs, one such row pair for each handset (120ᵢ), wherein each row of a row pair comprises an even row comprising a received data time slot for the respective data time slot for the respective handset and a plurality of transmit and receive audio packet time slots for half of the maximum number of the plurality of handsets which may be communicating at a time , and an odd row comprising a received data time slot for the respective data time slot for the respective handset and a plurality of transmit and receive audio time slots for the other half of the maximum number of the plurality of handsets which may be communicating at a time; and
each handset (120ᵢ) receives and transmits data packets via receive and transmit data packet slots (251, 252) only once during each epoch (200), during the transmit and receive data and row pair for each said handset, and if the handset is communicating with the base unit, said each handset receives and transmits audio packets during respective transmit and receive audio packet time slots (253, 254) of each row pair of the epoch.

12. The base unit of claim 11, wherein the data source is a memory for storing data and the requested data Is stored data stored in the memory.

13. A wireless telephone system (100), comprising:
(a) a base unit (110) having a base transceiver (111, 112); and
(b) a plurality of wireless handsets (120), each handset (120ᵢ) comprising a handset transceiver (121,122) for establishing a data link and an audio link with the base unit (110) via the base transceiver, wherein the data link is for transmitting signaling information and the audio link is for transmitting voice data for a real-time telephone call, **characterized in that**:
said base unit (110), upon request from a handset (120ᵢ) for non-voice data from a data source, retrieves the requested data from the data source and transmits the retrieved data to the handset (120ᵢ) via the audio link if the handset is not currently using the audio link to transmit real-time telephone conference voice data and transmits the stored information to the handset via the data link otherwise.

14. The wireless telephone system of claim 13 wherein when said stored data is requested said audio link is temporarily converted to a stored data link, voice data transmission is halted temporarily and said requested stored data is transmitted during said handset's audio data slots at a much higher rate than if the lower data link were used.

## Patentansprüche

1. Drahtloses Telefonsystem (100) umfassend:
(a) eine Basis-Einheit (110) mit einem Basis-Transceiver (111, 112); und
(b) eine Mehrzahl von drahtlosen Handgeräten (120), wobei jedes Handgerät (120ᵢ) einen Handgerät-Transceiver (121, 122) enthält, um mit der Basis-Einheit (110) über den Basis-Transceiver eine Zeitmultiplex-Datenverbindung mit mehrfachem Zugriff (TDMA) und eine TDMA-Audio-Verbindung gemäß einem TDMA-Zeitraum (200) zu errichten, der jedem Handgerät (120ᵢ) exklusive Daten und Audio-Paket-Zeitschlitze zuordnet, wobei die Datenverbindung für die Übertragung von Signalisierungs-Informationen und die Audio-Verbindung für die Übertragung von Stimmen-Daten für ein Echtzeit-Telefongespräch da ist, **dadurch gekennzeichnet,**
**dass** die Basis-Einheit (110) bei einer Anforderung von einem Handgerät (120ᵢ) für Daten aus einer Datenquelle, die angeforderten Daten von der Datenquelle wiedergewinnt und die wiedergewonnenen Daten zu dem Handgerät (120ᵢ) über die Audio-Verbindung überträgt, wobei:
der Zeitraum (200) eine Mehrzahl von Sende- und Empfangs-Datenreihen-Paaren aufweist, ein solches Paar für jedes Handgerät (120ᵢ), wobei jedes Reihenpaar eine geradzahlige Reihe umfasst, die einen Sendedaten-Zeitschlitz (251) für das entsprechende Handgerät umfasst, und eine Mehrzahl von Sende- und Empfangs-Audio-Paket-Zeitschlitzen (253, 254) für die halbe maximale Zahl der Mehrzahl von Handgeräten, die zu einer Zeit kommunizieren können, und eine ungeradzahlige Reihe, die einen Empfangsdaten-Zeitschlitz (252) für das entsprechende Handgerät umfasst, und
eine Mehrzahl von Sende- und Empfangs-Audio-Paket-Zeitschlitzen für die andere Hälfte der maximalen Zahl der Mehrzahl von Handgeräten, die zu einer Zeit kommunizieren können; und
jedes Handgerät (120ᵢ) Datenpakete über die Empfangs- und Sende-Datenpaket-Schlitze (251, 252) nur einmal während jedes Zeitraums (200) während des Sende- und Empfangs-Daten-Reihen-Paares für jedes Handgerät empfängt und sendet, und wenn das Handgerät mit der Basis-Einheit kommuniziert, jedes der Handgeräte Audiopakete während entsprechender Sende- und Empfangs-Audiopaket-Zeitschlitze (253, 254) jedes Reihenpaares des Zeitraums enpfängt und sendet.

2. System nach Anspruch 1, bei dem die Mehrzahl von Handgeräten (120) zwölf Handgeräte umfasst, von denen acht gleichzeitig kommunizieren können;
der Zeitraum (200) zwölf Datenreihen-Paare umfasst, ein Datenreihen-Paar für jedes Handgerät; und
jedes Reihenpaar acht Sende- und Empfangs-Audio-Paket-Zeitschlitzpaare für die Audio-Kommunikation für die kommunizierenden Handgeräte umfasst.

3. System nach Anspruch 1, bei dem die Datenquelle ein Speicher (118) zur Speicherung von Daten ist und die angeforderten Daten in dem Speicher gespeicherte Daten sind.

4. System nach Anspruch 3, bei dem die Basis-Einheit (110) den Speicher (118) enthält.

5. System nach Anspruch 3, bei dem die Basis-Einheit (110) mit einem externen Rechner verbunden ist, der den Speicher (118) enthält.

6. System nach Anspruch 3, bei dem die Basis-Einheit (110) die gespeicherten Informationen nur zu dem Handgerät (120ᵢ) über die Audio-Verbindung sendet, wenn das Handgerät nicht gegenwärtig die Audio-Verbindung benutzt, um Echtzeit-Telefon-Konferenz-Stimmendaten zu senden und die gespeicherten Informationen zu dem Handgerät über die Datenverbindung sendet, wenn das Handgerät gegenwärtig die Audio-Verbindung dazu verwendet, Echtzeit-Telefon-Konferenz-Stimmendaten zu senden.

7. System nach Anspruch 3, bei dem die gespeicherten Informationen eine gespeicherte Anrufer-ID-Information oder gespeicherte komprimierte Voice-Mail-Nachrichten-Daten sind.

8. System nach Anspruch 7, bei dem das Handgerät, das die gespeicherten Informationen anfordert, die gespeicherten Informationen bei Empfang gemäß der Natur der gespeicherten Informationen verarbeitet.

9. Drahtloses Telefonsystem (100) umfassend eine Basis-Einheit (110) mit einem Basis-Transceiver (111, 112) und einer Mehrzahl von drahtlosen Handgeräten (120), wobei jedes Handgerät (120ᵢ) einen Handgerät-Transceiver (121, 122) umfasst und ein Verfahren die Schritte umfasst:
(a) Erstellen mit jedem Handgerät über seinen Handgerät-Transceiver eine Zeitmultiplex-Datenverbindung mit mehrfachem Zugriff (TDMA) mit der Basis-Einheit über den Basis-Transceiver, und mit jedem Handgerät, das mit der Basis-Einheit kommuniziert, eine TDMA-Audio-Verbindung mit der Basis-Einheit über den Basis-Transceiver gemäß einem TDMA-Zeitraum (200), der jedem Handgerät (120ᵢ) exklusive Daten und Audio-Paket-Zeitschlitze zuordnet, wobei die Datenverbindung für das Senden von Signalisierungs-Informationen und die Audio-Verbindung für das Senden von Stimmendaten für ein Echtzeit-Telefongespräch da ist, **gekennzeichnet durch** die Schritte:
(b) Anfordern von Daten aus einer Datenquelle mit dem Handgerät von der Basis-Einheit;
(c) Wiedergewinnen der angeforderten Daten mit der Basis-Einheit aus der Datenquelle als Reaktion auf die Anforderung; und
(d) Senden der wiedergewonnenen Daten von der Basis-Einheit zu dem Handgerät über die Audio-Verbindung; wobei:
der Zeitraum (200) eine Mehrzahl von Sende- und Empfangs-Daten-Reihenpaaren aufweist, ein solches Reihenpaar für jedes Handgerät (120ᵢ), wobei jede Reihe eines Reihenpaares eine geradzahlige Reihe umfasst, die einen Sende-Daten-Zeitschlitz für das entsprechende Handgerät und eine Mehrzahl von Sende- und Empfangs-Audio-Paket-Zeitschlitzen für die halbe maximale Zahl der mehreren Handgeräte umfasst, die gleichzeitig kommunizieren können, und eine ungeradzahlige Reihe, die einen Empfangs-Daten-Zeitschlitz für das entsprechende Handgerät und eine Mehrzahl von Sende- und Empfangs-Audio-Paket-Zeitschlitzen für die andere Hälfte der maximalen Zahl von Handgeräten umfasst, die gleichzeitig kommunizieren können, und jedes Handgerät (120ᵢ) Datenpakete über Empfangs- und Sende-Datenpaket-Schlitze (251, 252) nur einmal während jedes Zeitraums (200) während des Sende- und Empfangs-Daten-Reihenpaars für das Handgerät empfängt und sendet, und wenn das Handgerät mit der Basis-Einheit kommuniziert, jedes Handgerät Audio-Pakete während entsprechenden Sende- und Empfangs-Audio-Paket-Zeitschlitzen (253, 254) von jedem Reihenpaar des Zeitraums empfängt und sendet.

10. Verfahren nach Anspruch 9, bei dem die Datenquelle ein Speicher zum Speichern von Daten ist und die angeforderten Daten gespeicherte Daten sind, die in dem Speicher gespeichert sind.

11. Basis-Einheit (110) zum Kommunizieren mit einer Mehrzahl von drahtlosen Handgeräten (120), wobei jedes Handgerät (120ᵢ) einen Handgerät-Transceiver (121, 122) enthält, wobei die Basis-Einheit (110) umfasst:
(a) einen Basis-Transceiver (11, 112), um mit jedem Handgerät über den Basis-Transceiver eine Zeitmultiplex-Datenverbindung mit mehrfachem Zugriff (TDMA) und mit jedem Handgerät, das mit der Basis-Einheit kommuniziert, eine TDMA-Audio-Verbindung über den Basis-Transceiver gemäß einem Zeitraum (200) zu errichten, der jedem Handgerät (120ᵢ) exklusive Daten und Audio-Paket-Zeitschlitze zuordnet, wobei die Datenverbindung für das Senden von Signalisierungs-Informationen und die Audio-Verbindung für das Senden von Stimmendaten für ein Telefongespräch da ist; und
(b) einen Speicher (118) zum Speichern von gespeicherten Informationen, **dadurch gekennzeichnet, dass** die Basis-Einheit bei Anforderung von in dem Speicher gespeicherten Informationen von dem Handgerät, die angeforderten gespeicherten Informationen von dem Speicher wiedergewinnt und die gespeicherten Informationen zu dem Handgerät über die Audio-Verbindung sendet, worin:
der Zeitraum (200) eine Mehrzahl von Sende- und Empfangsdaten-Reihenpaaren, ein solches Reihenpaar für jedes Handgerät (120ᵢ) aufweist, wobei jede Reihe eines Reihenpaares eine geradzahlige Reihe umfasst, die einen empfangenen Daten-Zeitschlitz für den entsprechenden Daten-Zeitschlitz für das entsprechende Handgerät, und eine Mehrzahl von Sendeund Empfangs-Audio-Paket-Zeitschlitzen für die Hälfte der maximalen Zahl der Mehrzahl von Handgeräten umfasst, die zu einer Zeit kommunizieren können; und eine ungerade Reihe, die einen empfangenen Daten-Zeitschlitz für den entsprechenden Daten-Zeitschlitz für das entsprechende Handgerät und eine Mehrzahl von Sende- und Empfangs-Audio-Zeitschlitzen für die andere Hälfte der maximalen Zahl der Mehrzahl von Handgeräten umfasst, die zu einer Zeit kommunizieren können; und
jedes Handgerät (120ᵢ) Datenpakete über Empfangs- und Sende-Datenpaket-Schlitze (251, 252) nur einmal während jedes Zeitraums (200) während des Sende- und Empfangs-Daten- und Reihenpaares für jedes Handgerät empfängt, und wenn das Handgerät mit der Basis-Einheit kommuniziert, jedes Handgerät Audio-Pakete während entsprechenden Sende- und Empfangs-Audio-Paket-Zeitschlitzen (253, 254) während jedes Reihenpaares des Zeitraums empfängt und sendet.

12. Basis-Einheit nach Anspruch 11, bei der die Datenquelle ein Speicher zum Speichern von Daten ist und die angeforderten Daten gespeicherte Daten sind, die in dem Speicher gespeichert sind.

13. Drahtloses Telefonsystem (100) umfassend:
(a) eine Basis-Einheit (110) mit einem Basis-Transceiver (111, 112) und
(b) eine Mehrzahl von drahtlosen Handgeräten (120), von denen jedes einen Handgerät-Transceiver (121, 122) umfasst, um eine Datenverbindung und eine Audio-Verbindung mit der Basis-Einheit (110) über den Basis-Transceiver zu errichten, wobei die Datenverbindung zum Senden von Signalisierungs-Informationen und die Audio-Verbindung zum Senden von Stimmendaten für ein Echtzeit-Telefongespräch da ist, **dadurch gekennzeichnet, dass**:
die Basis-Einheit (110) bei Anforderung von einem Handgerät (120ᵢ) für Nicht-Stimmendaten von einer Datenquelle die angeforderten Daten von der Datenquelle wiedergewinnt und die wiedergewonnenen Daten zu dem Handgerät (120ᵢ) über die Audio-Verbindung sendet, wenn das Handgerät gegenwärtig nicht die Audio-Verbindung dazu benutzt, Echtzeit-Telefonkonferenz-Stimmendaten zu senden, und sendet sonst die gespeicherten Informationen über die Datenverbindung zu dem Handgerät.

14. Drahtloses Telefonsystem nach Anspruch 13, bei dem, wenn die gespeicherten Daten angefordert werden, die Audio-Verbindung zeitweilig in eine gespeicherte Datenverbindung umgewandelt, die Stimmendaten-Sendung zeitweilig angehalten und die angeforderten gespeicherten Daten während des Audio-Datenschlitzes des Handgerätes mit einer viel höheren Rate gesendet werden, als wenn die langsamere Datenverbindung verwendet würde.

## Revendications

1. Système téléphonique sans fil (100) comportant :
(a) une base (110) ayant son propre émetteur-récepteur (111,112) ; et
(b) une pluralité de combinés sans fil (120), chaque combiné (120ᵢ) ayant son propre émetteur-récepteur (121, 122) pour établir avec la base (110), par l'intermédiaire de l'émetteur-récepteur de la base, une liaison de données TDMA (Time Division Multiple Access - Accès multiple à répartition dans le temps) et une liaison audio TDMA, d'après un cycle TDMA (200) qui affecte des tranches de temps exclusives de paquets de données et de paquets audio à chaque combiné (120ᵢ), dans laquelle la liaison de données sert à transmettre des informations de signalisation et la liaison audio set à transmettre des données vocales pour un appel téléphonique en temps réel, **caractérisé en ce que**
ladite base (110) sur demande d'un combiné (120ᵢ) de données provenant d'une source de données , extrait de la source de données les données demandées et transmet au combiné (120ᵢ), par la liaison audio, les données extraites,
dans lequel :
le cycle (200) comporte une pluralité de paires de rangées d'émission et de réception de données , une paire de rangée par combiné (120ᵢ), dans lequel chaque paire de rangées comporte une rangée paire comportant une tranche de temps d'émission de données (251) pour le combiné respectif et une pluralité de tranches de temps d'émission et de réception de paquets audio (253, 254) pour la moitié du nombre maximal de la pluralité de combinés qui peuvent communiquer en même temps, et une rangée impaire comportant une tranche de temps de réception de données (252) pour le combiné respectif et une pluralité de tranches de temps d'émission et de réception de paquets audio pour l'autre moitié du nombre maximal de la pluralité de combinés qui peuvent communiquer en même temps ; et
chaque combiné (120ᵢ) ne reçoit et n'émet des paquets de données dans lesdites tranches de temps d'émission et de réception de paquets de données (251, 252) qu'une fois par cycle (200), pendant la paire de rangées d'émission et de réception de données pour chaque dit combiné, et, si le combiné est en communication avec la base, chacun desdits combinés reçoit et émet des paquets audio pendant les tranches de temps respectives d'émission et de réception de paquets audio (253, 254) de chaque paire de rangées du cycle.

2. Système selon la revendication 1 dans lequel :
la pluralité de combinés (120) comporte 12 combinés dont 8 peuvent communiquer en même temps ;
le cycle (200) comporte douze paires de rangées de données, une paire pour chaque combiné ; et
chaque paire de rangées comporte 8 paires de tranches de temps d'émission et de réception de paquets audio servant aux communications audio des combinés qui communiquent.

3. Système selon la revendication 1, dans lequel la source de données est une mémoire (118) destinée à enregistrer des données et les données demandées sont des données enregistrées dans la mémoire.

4. Système selon la revendication 3, dans lequel la base (110) contient la mémoire (118).

5. Système selon la revendication 3, dans lequel la base (110) est reliée à un ordinateur externe contenant la mémoire (118).

6. Système selon la revendication 3, dans lequel la base (110) transmet au combiné (120ᵢ) les informations enregistrées par la liaison audio seulement si le combiné n'est pas en train de l'utiliser pour transmettre des données vocales de conférence téléphonique en temps réel et transmet au combiné les informations enregistrées par la liaison de données si le combiné est en train d'utiliser la liaison audio pour transmettre des données vocales de conférence téléphonique en temps réel.

7. Système selon la revendication 3, dans lequel les informations enregistrées sont des informations enregistrées d'identification d'un appelant et des données enregistrées de messages de courrier vocal comprimées.

8. Système selon la revendication 7, dans lequel le combiné qui demande des informations enregistrées les traite quand il les reçoit selon leur nature.

9. Dans un système téléphonique sans fil (100) comportant une base (110) ayant son propre émetteur-récepteur (111, 112) et une pluralité de combinés sans fil (120), chaque combiné (120ᵢ) ayant son propre émetteur-récepteur (121, 122), procédé comportant les étapes suivantes :
(a) établissement, avec chaque combiné par l'intermédiaire de son émetteur-récepteur d'une liaison de données TDMA (Time Division Multiple Access - Accès multiple à répartition dans le temps) avec la base par l'intermédiaire de son émetteur-récepteur, et, avec chaque combiné en communication avec la base, d'une liaison audio TDMA avec la base par l'intermédiaire de l'émetteur-récepteur de la base, selon un cycle TDMA (200) qui affecte à chaque combiné (120i) des tranches de temps exclusives de paquets de données et de paquets audio, dans lesquelles, la liaison de données sert à transmettre des informations de signalisation et la liaison audio sert à transmettre des données vocales pour un appel téléphonique en temps réel ;
**caractérisé par** les étapes suivantes :
(b) demande, par le combiné, venant de la base, de données provenant d'une source de données ;
(c) extraction, par la base, des données demandées de la source de données en réponse à la demande ; et
(d) transmission des données extraites de la base au combiné par la liaison audio ;
dans lequel :
le cycle (200) comporte une pluralité de paires de rangées d'émission et de réception de données , une paire de rangées par combiné (120ᵢ), dans lequel chaque paire de rangées comporte une rangée paire comportant une tranche de temps d'émission de données pour le combiné respectif et une pluralité de tranches de temps d'émission et de réception de paquets audio pour la moitié du nombre maximal de la pluralité de combinés qui peuvent communiquer en même temps, et une rangée impaire comportant une tranche de temps de réception de données pour le combiné respectif et une pluralité de tranches de temps d'émission et de réception de paquets audio pour l'autre moitié du nombre maximal de la pluralité de combinés qui peuvent communiquer en même temps ; et
chaque combiné (120ᵢ) ne reçoit et n'émet des paquets de données dans lesdites tranches de temps d'émission et de réception de paquets de données (251, 252) qu'une fois par cycle (200), pendant la paire de rangées d'émission et de réception de données pour chaque dit combiné, et, si le combiné est en communication avec la base, chacun desdits combinés reçoit et émet des paquets audio pendant les tranches de temps respectives d'émission et de réception de paquets audio (253, 254) de chaque paire de rangées du cycle.

10. Procédé selon la revendication 9, dans lequel la source de données est une mémoire destinée à enregistrer des données et les données demandées sont des données enregistrées dans la mémoire.

11. Base (110) pour communiquer avec une pluralité de combinés sans fil (120), chaque combiné (120ᵢ) ayant son propre émetteur-récepteur (121, 122), la base (110) comportant :
(a) un émetteur-récepteur (111, 112) pour établir une liaison de données TDMA (Time Division Multiple Access - Accès multiple à répartition dans le temps) avec chaque combiné par l'intermédiaire de l'émetteur-récepteur de la base, et, avec chaque combiné qui est en communication avec la base, une liaison audio TDMA par l'intennédiaire de l'émetteur-récepteur de la base, selon un cycle TDMA (200) qu affecte à chaque combiné (120ᵢ) des tranches de temps exclusives de paquets de données et de paquets audio dans lesquelles la liaison de données sert à transmettre des informations de signalisation et la liaison audio sert à transmettre des données vocales pour un appel téléphonique ; et
(b) une mémoire (118) destinée à enregistrer des informations, **caractérisée en ce que** :
ladite base, sur demande d'un combiné d'informations enregistrées dans la mémoire, extrait de la mémoire les informations enregistrées demandées et les transmet au combiné par la liaison audio, dans laquelle :
le cycle (200) comporte une pluralité de paires de rangées d'émission et de réception de données , une paire de rangées par combiné (120ᵢ), dans lequel chaque paire de rangées comporte une rangée paire comportant une tranche de temps d'émission de données pour le combiné respectif et une pluralité de tranches de temps d'émission et de réception de paquets audio pour la moitié du nombre maximal de la pluralité de combinés qui peuvent communiquer en même temps, et une rangée impaire comportant une tranche de temps de réception de données pour le combiné respectif et une pluralité de tranches de temps d'émission et de réception de paquets audio pour l'autre moitié du nombre maximal de la pluralité de combinés qui peuvent communiquer en même temps ; et
chaque combiné (120ᵢ) ne reçoit et n'émet des paquets de données dans lesdites tranches de temps d'émission et de réception de paquets de données (251, 252) qu'une fois par cycle (200), pendant la paire de rangées d'émission et de réception de données pour chaque dit combiné, et, si le combiné est en communication avec la base, chacun desdits combinés reçoit et émet des paquets audio pendant les tranches de temps respectives d'émission et de réception de paquets audio (253, 254) de chaque paire de rangées du cycle.

12. Base selon la revendication 11, dans laquelle la source de données est une mémoire destinée à enregistrer des données et les données demandées sont des données enregistrées dans la mémoire.

13. Système téléphonique sans fil (100), comportant :
(a) une base (110) ayant son propre émetteur-récepteur (111, 112) ; et
(b) une pluralité de combinés sans fil (120) ayant chacun leur propre émetteur-récepteur (121, 122) pour établir une liaison de données et une liaison audio avec la base (110) par l'intermédiaire de l'émetteur-récepteur de la base, dans lequel la liaison de données sert à transmettre des informations de signalisation et la liaison audio sert à transmettre des données vocales pour un appel téléphonique en temps réel, **caractérisé en ce que** :
ladite base (110), sur demande d'un combiné (120ᵢ) de données non-vocales provenant d'une source de données, extrait les données demandées de la source de données et les transmet au combiné (120i) par la liaison audio si le combiné n'est pas en train de l'utiliser pour transmettre des données vocales de conférence téléphonique en temps réel et, sinon, transmet au combiné les informations enregistrées par la liaison de données.

14. Système téléphonique sans fil selon la revendication 13, dans lequel quand lesdites données enregistrées sont demandées, ladite liaison audio est temporairement convertie en liaison de données enregistrées, la transmission des données vocales est arrêtée temporairement et lesdites données enregistrées demandées sont transmises pendant lesdites tranches de temps de données audio du combiné à un débit beaucoup plus élevé que si la liaison de données de débit plus faible était utilisée.
